# EUROPEAN PATENT SPECIFICATION

(11) **EP 2 086 717 B1**
(45) Date of publication and mention of the grant of the patent: **14.07.2010**
(21) Application number: 07736822.3
(22) Date of filing: 30.04.2007
(51) Int. Cl.: B23Q 1/60, B23Q 11/00, B23Q 17/22, G05B 19/404

(54) **DEVICE FOR DETECTING THERMAL DEFORMATIONS OF A SPINDLE OF A MACHINE-TOOL**
VORRICHTUNG ZUR ERFASSUNG VON WÄRMEVERFORMUNGEN EINER SPINDEL EINER WERKZEUGMASCHINE
DISPOSITIF DE DÉTECTION DE DÉFORMATIONS THERMIQUES D'UNE BROCHE DE MACHINE-OUTIL

(30) Priority: 06.10.2006 IT MI20061928
(43) Date of publication of application: 12.08.2009
(73) Proprietor: Camozzi Machine Tools S.p.A., 25126 Brescia (IT)
(72) Inventor: GOFFRINI, Roberto, 25124 Brescia (IT)
(74) Representative: Pulieri, Gianluca Antonio
(86) International application number: PCT/IT2007/000319
(87) International publication number: WO 2008/041257

(56) References cited:
- EP-A- 0 343 517
- WO-A-2005/002790
- US-A- 5 214 592
- US-B1- 6 301 520

## Description

The object of the present invention is a device for detecting the deformations of a spindle of a machine-tool according to the preamble of claim 1 (see, for example, US-6,301,520).

In the field of machine tools, especially of large dimensions, the need of manufacturing a mechanical part with increasingly smaller processing tolerances is strongly felt by the users. Such need affects the manufacturers of such machines, which carry out considerable research and development efforts to offer machines with increasingly better performance.

The extent of the processing tolerances that can be obtained for a mechanical part is strongly affected by the thermal and mechanical deformations undergone by the machine support parts, which support a processing tool in a desired position in space.

Generally, a machine comprises a main guide and a mobile group consisting of a travelling support, sliding on such guide, a spindle carrier, sliding transversal to the travelling support, a spindle, sliding parallel to the spindle carrier and suitable for rotating around its axis of rotation, and a tool holder, which is connectable to a processing tool, arranged at the front end of the spindle.

While the main guide, especially for large sized machines, exhibits systems for compensating the deformations so far deemed as reliable, the mobile group at present does not exhibit as much effective systems for remedying the deformations of a thermal nature that characterise such zone.

Several solutions of devices for detecting the deformations undergone by the support parts of a machine-tool exist.

The object of the present invention is to improve the devices currently known, making them such as to detect the thermal deformations occurred with greater reliability.

Such object is achieved by a detection device obtained according to claim 1. The dependent claims describe embodiment variations.

The features and advantages of the detection device according to the present invention will appear more clearly from the following description, made by way of an indicative and non-limiting example with reference to the following figures, wherein:

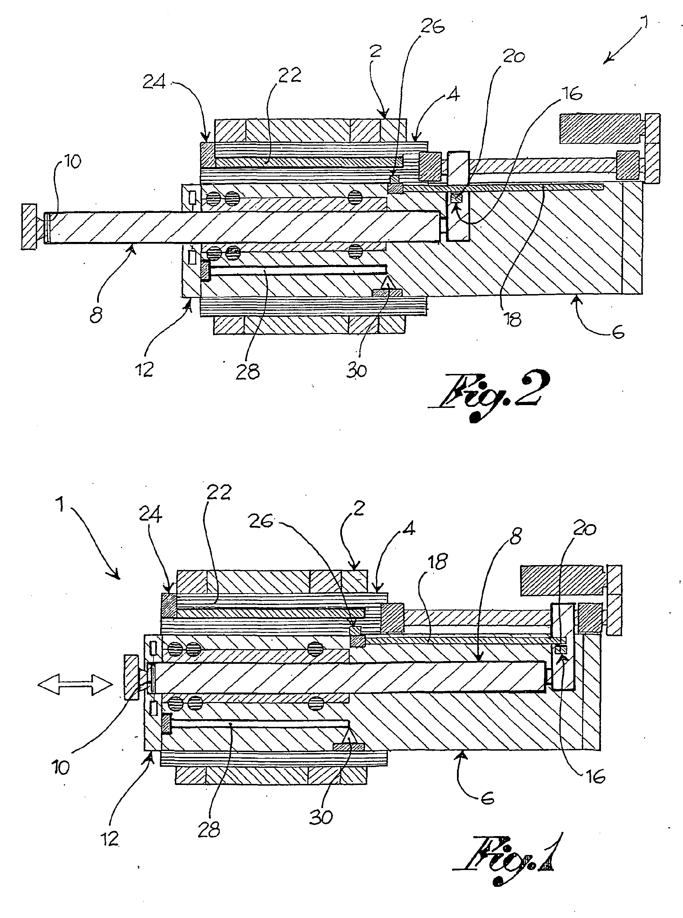

- figure 1 shows a schematic view of a machine tool comprising a detection device according to the present invention, in an retracted position of the spindle and of the spindle carrier;

- figure 2 shows a diagram of the machine of figure 1, in an extended position of the spindle; and

- figure 3 shows a diagram of a machine tool according to a variation of embodiment, comprising the detection device according to the present invention.

With reference to the annexed figures, reference numeral 1 globally denotes a machine tool.

According to a preferred embodiment, machine 1 comprises a fixed guide 2, which extends along a prevailing longitudinal direction, for example vertical, that is, perpendicular to the ground surface the machine rests on.

Moreover, machine 1 comprises a mobile group, associated to guide 2. The mobile group can be moved at least along said longitudinal direction of guide 2 and comprises a travelling support 4, operatively connected to the guide for shifting along said longitudinal direction, and a spindle carrier-spindle unit, supported by travelling support 4 and integral in shifting therewith.

The spindle carrier-spindle unit, associated to travelling support 4, comprises a spindle carrier 6, in jargon called "ram", and a spindle 8.

Spindle carrier 6 is supported by travelling support 4 and operatively connected thereto so as to shift relative to said travelling support along an axial direction, perpendicular to the longitudinal direction along which travelling support 4 can shift relative to guide 2.

In particular, spindle carrier 6 is suitable for shifting between a retracted position and an extended position, suitable for executing a process on a mechanical part, wherein spindle carrier 6 protrudes more at the front from travelling support 4 as compared to the retracted position.

Spindle carrier 6 exhibits an inner space open at the front through a spindle carrier opening.

Moreover, the spindle carrier-spindle unit comprises a spindle 8, at least partly seated in the spindle carrier space.

Spindle 8 is supported by spindle carrier 6 so as to rotate about an axis of rotation thereof and so as to shift relative to spindle carrier 6 along said axial direction.

In particular, spindle 8 is suitable for shifting between a retracted position and an extended position, suitable for executing a process on a mechanical part, wherein it protrudes at the front from spindle carrier 6 through said spindle carrier opening more than in said retracted position.

Spindle 8 comprises a signalling element 10, integral in shifting with the spindle, arranged in the proximity of the front end of said spindle.

In other words, the signalling element is arranged, depending on the minimum structural dimensions that characterise it, close to the tool holder usually connected to the front end of the spindle.

For example, said signalling element 10 is made of a hole or a groove into the spindle or an obstacle wall protruding from the spindle.

Moreover, the spindle carrier-spindle unit comprises a spindle carrier cover 12, in jargon called "dummy cover", associable at the front with spindle carrier 6 for covering, at least partly, said spindle carrier opening allowing in any case the shifting of spindle 8.

The spindle carrier cover 12 is removably associable to spindle carrier 6.

In particular, when the use of spindle 8 is required to execute a mechanical process, cover 12 is associated to the spindle carrier, especially for protecting the interface systems for machine accessories (for example square heads, universal heads, etc.). When the spindle on the other hand is not used, cover 12 is removed from spindle carrier 6 and a processing accessory is associated to the front thereof, for example a milling head.

The spindle carrier-spindle unit comprises detection means, attached to the spindle carrier cover 12, suitable for detecting the position of the signalling element 10 of the spindle for detecting the thermal deformation of said spindle in said retracted position.

For example, the detection means comprise a laser device suitable for emitting a laser beam for detecting the position of the signalling element 10.

According to an embodiment variation, the detection means comprise a switch suitable for opening or closing when influenced by the signalling element 10.

According to a further variation of embodiment, said detection means comprise a proximeter for detecting the position of the signalling element.

In the following description, two typical states of the machine shall often be referred to: the "cold" state, which characterises the machine after a more or less long standstill machine period and wherein the machine substantially exhibits same dimensions as the project ones, and the "hot state" which characterises the machine after a warming cycle, usually carried out after the standstill period and before a process, or after the execution of a process, wherein the machine exhibits deformed dimensions as compared to project ones, especially due to the thermal deformations occurred.

Moreover, it should be noted that the retracted spindle position is defined through said detection means.

In other words, when said detection means detect the presence of the signalling element 10 integral to the spindle, the position the spindle has at the time of said signalling is defined as retracted spindle position.

In yet other words, when the hot spindle is moved to the retracted position, the detection means detect the position of the signalling element 10 of the spindle, advantageously arranged in the proximity of the front end of said spindle.

Said cover 12 and said detection means, cooperating with the signalling element arranged on the spindle make up a device for detecting and consequently compensating the thermal deformation of the spindle.

According to a preferred embodiment, said mobile group comprises means for detecting the deformation of cover 12 suitable for detecting the thermal deformation optionally undergone by cover 12.

For example, said means for detecting the deformation of the cover comprise a thermal probe or a cover bar made of a substantially thermally non-deformable material, for example Invar^{®}.

Moreover, the spindle carrier-spindle unit comprises first measurement means suitable for measuring the axial advancement of spindle 8 between a fixed reference position 14 on spindle carrier 6 and a moving reference 16, moving relative to spindle carrier 6 and integral in shifting to spindle 8.

According to a preferred embodiment, said measurement means comprise:

- a first optical rule 18 integral in shifting with spindle carrier 6 and fixed to said spindle carrier in a position of rule for spindle, which makes up said fixed reference position 14 on the spindle carrier, and

- a first rule sensor 20, integral in rotation to spindle 8 and suitable for cooperating with said first optical rule 18 for detecting the axial advancement of the spindle.

In the standard operation of machine 1, while spindle 8 is shifting, the position taken by the first rule sensor 20 is detected by the optical rule 18, thus providing a measurement of the axial advancement of the spindle relative to the spindle carrier. A feedback control allows axially positioning the spindle according to the needs.

The mobile group comprises second measurement means suitable for measuring the axial advancement of spindle carrier 6 relative to travelling support 4.

According to a preferred embodiment, said second measurement means comprise:

- a second optical rule 22 integral in shifting to travelling support 4 and fixed to said travelling support in a position of rule for spindle carrier 24, and

- a second rule sensor 26, integral in rotation to spindle carrier 6, suitable for cooperating with said second optical rule 22 for detecting the axial advancement of the spindle carrier relative to the travelling support. A feedback control allows axially positioning the spindle carrier according to the needs.

In the standard operation of machine 1, while spindle carrier 6 is shifting, the position taken by the second rule sensor 26 is detected by the optical rule 22, thus providing a measurement of the axial advancement of spindle carrier 6 relative to travelling support 4.

The retracted spindle carrier position is defined through said second measurement means. When the spindle carrier is fully retracted, the rule indicates the maximum spindle carrier stroke; when the spindle carrier is fully forward the rule indicates "zero" and this also corresponds to the rule zero. Moreover, the mobile group comprises second detection means suitable for detecting the thermal deformation of spindle carrier 6.

According to a preferred embodiment, said second detection means comprise a bar 28 of a substantially thermally non-deformable material.

The term "substantially thermally non-deformable" material indicates a material for which the thermal expansion coefficient is much lower than that of the material the spindle carrier is made of, for example lower than one tenth of the latter. For example, bar 28 is made of Invar^{®}.

Bar 28 mainly extends in axial direction, between a front end, fixed to the spindle carrier in the proximity of the front end thereof, and a back end.

When cold, the back end of bar 28 is aligned with the position of the second rule sensor 26 of the means for measuring the spindle carrier advancement.

Moreover, said second detection means comprise a bar sensor 30, integral to spindle carrier 6 and suitable for detecting the axial distance of the back end of bar 28.

In the standard operation, during the processing step, the second detection means continuously detect the hot distance between the back end of bar 28 and the bar sensor 30. Based on such detections, the thermal deformation undergone by the spindle carrier is defined and the compensation thereof can thus be carried out.

In an embodiment, the fixing position of the second rule sensor 26 coincides with the rule position for spindle 14.

In a preferred embodiment, on the other hand, the fixing position of the second rule sensor 26 is axially spaced from said rule position for spindle 14.

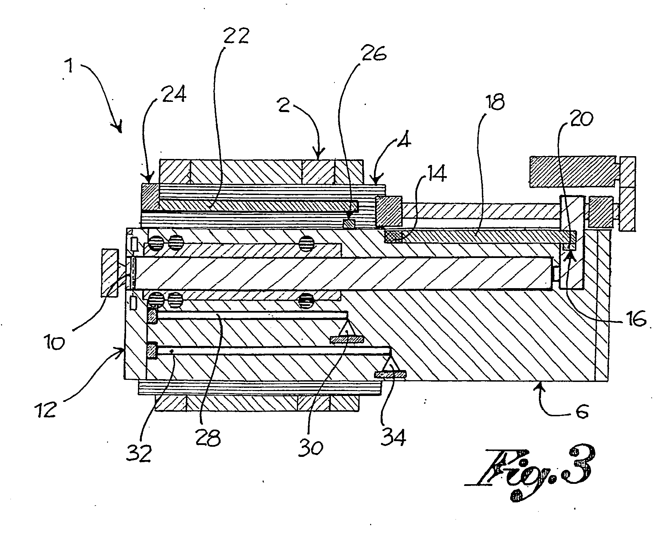

Advantageously in such preferred but non-exclusive embodiment, the mobile group comprises further detection means suitable for detecting the thermal deformation of the spindle carrier between the fixing position of the second rule sensor 26 and the rule position for spindle 14 (figure 3) .

Said further detection means are separate and independent of said second detection means.

Said further detection means comprise a further bar 32 of substantially thermally non-deformable material, for example Invar^{®}.

The further detection means further comprise a bar sensor 34, integral to spindle carrier 6 and suitable for detecting the axial distance of said back end of the further bar 32.

When cold, the back end of the further bar 32 is aligned with the rule position for spindle 14. When hot, on the other hand, spindle carrier 6 has undergone a thermal deformation and the back end of the further bar 32 exhibits an axial distance from the rule position for spindle 14.

During the usual processing steps:

- the second detection means detect the back end of the first bar 28 and the fixing position of the second rule sensor 26;

- the further detection means detect the distance between the back end of the further bar 32 and the rule position for spindle 14 thus allowing excellent overall detection of the deformations occurred in the mobile group.

Innovatively, the detection device described above allows detecting the thermal deformation undergone by the spindle in a very effective manner, since the signalling element is arranged in a very close position to the front end of the spindle, close to the connection with the tool holder.

Advantageously, moreover, the first detection means are seated in the cover, thus remaining protected from chips, dirt, coolant and further pollutants generated during the execution of a process.

According to a further advantageous aspect, the first detection means when the spindle is not used and the spindle carrier is associated to a processing accessory, are removed from the working area, thus remaining protected.

According to an even further advantageous aspect, the first detection means are integral in shifting with the spindle carrier, allowing the detection of the spindle deformation without having to retract the spindle carrier, thus decreasing the times of some processes and increasing the reliability of the measurement, actually not changing the position taken by the spindle carrier.

It is clear that a man skilled in the art can make changes and variations to the detection device described above, as defined in the following claims.

## Claims

1. Device for detecting the thermal deformation of a spindle of a machine-tool,
wherein said machine tool comprises:
- a spindle carrier (6) movable along an axial direction, having an inner spindle carrier space open at the front through a spindle carrier opening;
- a spindle (8), at least partly seated in said spindle carrier space and supported for rotating about an axis of rotation, said spindle being operatively connected to the spindle carrier so as to shift along said axial direction between a retracted position and an extended position, suitable for executing a mechanical process, wherein it protrudes at the front from the spindle carrier through said spindle carrier opening more than in said retracted position, said spindle comprising a signalling element (10) ;
wherein said device comprises
- a spindle carrier cover (12) associable at the front with said spindle carrier for covering, at least partly, said spindle carrier opening allowing in any case the shifting of the spindle;
said device being **characterised in that** it comprises detection means attached to the spindle carrier cover, said detection means being suitable for detecting the position of the signalling element of the spindle for measuring the thermal deformation of said spindle in said retracted position.

2. Device according to claim 1, wherein said detection means comprise a laser device suitable for emitting a laser beam for detecting the position of said signalling element.

3. Device according to claim 1, wherein said detection means comprise a switch suitable for opening or closing when influenced by said signalling element.

4. Device according to claim 1, wherein said detection means comprise a proximeter for detecting the position of said signalling element.

5. Device according to any one of the previous claims, comprising means for detecting the deformation of the cover (12).

6. Device according to claim 5, wherein said means for detecting the cover deformation comprise a bar of substantially thermally non-deformable material, for example Invar®.

7. Spindle carrier-spindle unit of a machine tool comprising
- a spindle carrier (6) movable along an axial direction, having an inner spindle carrier space open at the front through a spindle carrier opening,
- a spindle (8), at least partly seated in said spindle carrier space and supported for rotating about an axis of rotation, said spindle being operatively connected to the spindle carrier so as to shift along said axial direction between a retracted position and an extended position, suitable for executing a process, wherein it protrudes at the front from the spindle carrier through said spindle carrier opening more than in said retracted position, said spindle comprising a signalling element (10), and
- a detection device made according to any one of the previous claims.

8. Spindle carrier-spindle unit according to claim 7, comprising first measurement means suitable for measuring the axial advancement of the spindle between a fixed reference position on the spindle carrier and a moving reference relative to the spindle carrier and integral to the spindle.

9. Spindle carrier-spindle unit according to claim 8, wherein said measurement means comprise
- a first optical rule (18) integral in shifting with spindle carrier and fixed to said spindle carrier in a position of rule for spindle (14), which makes up said fixed reference position on the spindle carrier, and
- a first rule sensor (20), integral in rotation to the spindle and suitable for cooperating with said first optical rule for detecting the axial advancement of the spindle.

10. Mobile group of a machine tool comprising:
- a travelling support (4) associable to a fixed guide (2) movable along a longitudinal direction of said fixed guide;
- a spindle carrier-spindle unit made according to any one of claims 7 to 9, movably associated to said travelling support.

11. Mobile group according to claim 10, comprising second measurement means suitable for measuring the axial advancement of the spindle carrier.

12. Mobile group according to claim 11, wherein said second measurement means comprise:
- a second optical rule (22) integral in shifting to the travelling support and fixed to said travelling support in a position of rule for spindle carrier (24), and
- a second rule sensor (26), integral in rotation to the spindle carrier, suitable for cooperating with said second optical rule for detecting the axial advancement of the spindle carrier.

13. Mobile group according to any one of claims 10 to 12, comprising second detection means suitable for detecting the spindle carrier deformation.

14. Mobile group according to claim 13, wherein said second detection means comprise:
a bar (28) of substantially thermally non-deformable material which mainly extends in axial direction, between a front end, fixed to the spindle carrier in the proximity of the front end thereof, and a back end, and - a bar sensor (30), integral to the spindle carrier and suitable for detecting the axial distance of said back end of the bar.

15. Machine tool (1) comprising a mobile group made according to any one of claims 10 to 14.

## Patentansprüche

1. Vorrichtung zum Detektieren der thermischen Verformung einer Spindel einer Werkzeugmaschine,
wobei die Werkzeugmaschine umfasst:
- einen Spindelträger (6), der entlang einer axialen Richtung beweglich bzw. bewegbar ist und einen inneren Spindelträgerraum aufweist, der vorne durch eine Spindelträgeröffnung offen ist;
- eine Spindel (8), die zumindest teilweise in dem Spindelträgerraum plaziert ist und für eine Drehung um eine Drehachse gelagert ist, wobei die Spindel betriebsmäßig mit dem Spindelträger verbunden ist, um sich entlang der axialen Richtung zwischen einer zurückgezogenen Position und einer ausgefahrenen Position zu verschieben, die geeignet ist, einen mechanischen Prozess durchzuführen, wobei sie vorne von dem Spindelträger durch die Spindelträgeröffnung stärker vorsteht als in der zurückgezogenen Position, wobei die Spindel ein Signalisierelement (10) umfasst;
wobei die Vorrichtung umfasst
- eine Spindelträgerabdeckung (12), die vorne mit dem Spindelträger verbindbar ist, um die Spindelträgeröffnung zumindest teilweise abzude-cken, wobei in jedem Fall das Verschieben der Spindel erlaubt bzw. mög-lich ist;
wobei die Vorrichtung **dadurch gekennzeichnet ist, dass** sie Detektionsmittel umfasst, die an der Spindelträgerabdeckung angebracht sind, wobei die Detektionsmittel geeignet sind, die Position des Signalisierelements der Spindel zu detektieren, um die thermische Verformung der Spindel in der zurückge-zogenen Position zu messen.

2. Vorrichtung nach Anspruch 1, wobei die Detektionsmittel eine Laservorrich-tung umfassen, die geeignet ist, einen Laserstrahl zum Detektieren der Position des Signalisierelements zu emittieren.

3. Vorrichtung nach Anspruch 1, wobei die Detektionsmittel einen Schalter um-fassen, der zum Öffnen bzw. Schließen geeignet ist, wenn er durch das Signalisierelement beeinflusst wird.

4. Vorrichtung nach Anspruch 1, wobei die Detektionsmittel ein Proximeter zum Detektieren der Position des Signalisierelements umfassen.

5. Vorrichtung nach einem der vorhergehenden Ansprüche, umfassend Mittel zum Detektieren der Verformung der Abdeckung (12).

6. Vorrichtung nach Anspruch 5, wobei die Mittel zum Detektieren der Abde-ckungsverformung eine Stange aus im Wesentlichen thermisch nicht ver-formbaren Material, beispielsweise Invar®, umfassen.

7. Spindelträger-Spindeleinheit einer Werkzeugmaschine, umfassend
- einen Spindelträger (6), der entlang einer axialen Richtung beweglich bzw. bewegbar ist und einen inneren Spindelträgerraum aufweist, der vorne durch eine Spindelträgeröffnung offen ist;
- eine Spindel (8), die zumindest teilweise in dem Spindelträgerraum plaziert ist und für eine Drehung um eine Drehachse gelagert ist, wobei die Spindel betriebsmäßig mit dem Spindelträger verbunden ist, um sich entlang der axialen Richtung zwischen einer zurückgezogenen Position und einer ausgefahrenen Position zu verschieben, die geeignet ist, einen Prozess durchzuführen, wobei sie vorne von dem Spindelträger durch die Spindelträgeröffnung stärker vorsteht als in der zurückgezogenen Position, wobei die Spindel ein Signalisierelement (10) umfasst, und
- eine Detektionsvorrichtung, gemacht nach einem der vorhergehenden An-sprüche.

8. Spindelträger-Spindeleinheit nach Anspruch 7, umfassend erste Messmittel, die geeignet sind, das axiale Vorrücken der Spindel zwischen einer festen Referenzposition an dem Spindelträger und einer sich bewegenden bzw. Bewegungsreferenz relativ zu dem Spindelträger und integral zu der Spindel zu messen.

9. Spindelträger-Spindeleinheit nach Anspruch 8, wobei die Messmittel umfassen
- ein erstes optisches Messlineal (18) integral beim Verschieben mit dem Spindelträger und an dem Spindelträger in einer Messlinealposition für Spindel (14) fixiert bzw. befestigt, welche die feste Referenzposition an dem Spindelträger ausmacht bzw. bildet, und
- einen ersten Messlinealsensor (20) integral beim Drehen zu der Spindel und geeignet, mit dem ersten optischen Messlineal zusammenzuarbeiten, um das axiale Vorrücken der Spindel zu detektieren.

10. Mobile Gruppe einer Werkzeugmaschine, umfassend:
- eine sich bewegende Stütze (4), die mit einer festen bzw. fixierten Führung (2) verbindbar ist, die entlang einer Längsrichtung der festen Führung beweglich bzw. bewegbar ist;
- eine Spindelträger-Spindeleinheit gedacht nach einem der Ansprüche 7 bis 9, die beweglich bzw. bewegbar mit der sich bewegenden Stütze verbunden ist.

11. Mobile Gruppe nach Anspruch 10, umfassend zweite Messmittel, die geeignet sind, das axiale Vorrücken des Spindelträgers zu messen.

12. Mobile Gruppe nach Anspruch 11, wobei die zweiten Messmittel umfassen:
- ein zweites optisches Messlineal (22) integral beim Verschieben zu der sich bewegenden Stütze und an der sich bewegenden Stütze in einer Messlinealposition für den Spindelträger (24) fixiert bzw. befestigt, und
- einen zweiten Messlinealsensor (26) integral beim Drehen zu dem Spindelträger und geeignet, mit dem zweiten optischen Messlineal zusammenzuarbeiten, um das axiale Vorrücken des Spindelträgers zu detektieren.

13. Mobile Gruppe nach einem der Ansprüche 10 bis 12, umfassend zweite De-tektionsmittel, die geeignet sind, die Spindelträgerverformung zu detektieren.

14. Mobile Gruppe nach Anspruch 13, wobei die zweiten Detektionsmittel umfas-sen:
- eine Stange (28) aus im Wesentlichen thermisch nicht verformbaren Mate-rial, die sich hauptsächlich in axialer Richtung zwischen einem vorderen Ende, das an dem Spindelträger in der Nähe des vorderen Endes davon fixiert bzw. befestigt ist, und einem hinteren Ende erstreckt, und
- einen Stangensensor (30) integral zu dem Spindelträger und geeignet, die axiale Entfernung des hinteren Endes der Stange zu detektieren.

15. Werkzeugmaschine (1), umfassend eine mobile Gruppe gedacht nach einem der Ansprüche 10 bis 14.

## Revendications

1. Dispositif pour détecter la déformation thermique d'une broche de machine-outil,
dans lequel ladite machine-outil comprend :
- un porte-broche (6) mobile le long d'une direction axiale, ayant un espace de porte-broche interne ouvert à l'avant à travers une ouverture du porte-broche ;
- une broche (8), au moins en partie emboîtée dans ledit espace de porte-broche et supportée à rotation autour d'un axe de rotation, ladite broche étant raccordée en service au porte-broche de manière à se déplacer le long de ladite direction axiale entre une position rétractée et une position déployée, appropriée pour effectuer un processus mécanique, dans laquelle elle fait saillie à l'avant du porte-broche à travers ladite ouverture du porte-broche davantage que dans ladite position rétractée, ladite broche comprenant un élément de signalisation (10) ;
dans lequel ledit dispositif comprend :
- un couvercle de porte-broche (12) pouvant être associé à l'avant avec ledit porte-broche pour recouvrir, au moins en partie, ladite ouverture du porte-broche permettant en tout cas le déplacement de la broche ;
ledit dispositif étant **caractérisé en ce qu'**il comprend des moyens de détection fixés au couvercle du porte-broche, lesdits moyens de détection étant appropriés pour détecter la position de l'élément de signalisation de la broche afin de mesurer la déformation thermique de ladite broche dans ladite position rétractée.

2. Dispositif selon la revendication 1, dans lequel lesdits moyens de détection comprennent un dispositif à laser approprié pour émettre un faisceau laser permettant de détecter la position dudit élément de signalisation.

3. Dispositif selon la revendication 1, dans lequel lesdits moyens de détection comprennent un commutateur approprié pour les ouvrir ou les fermer lorsqu'il est influencé par ledit élément de signalisation.

4. Dispositif selon la revendication 1, dans lequel lesdits moyens de détection comprennent un proximètre pour détecter la position dudit élément de signalisation.

5. Dispositif selon l'une quelconque des revendications précédentes, comprenant des moyens pour détecter la déformation du couvercle (12).

6. Dispositif selon la revendication 5, dans lequel lesdits moyens pour détecter la déformation du couvercle comprennent une barre de matériau sensiblement non déformable thermiquement, par l'exemple de l'Invar®.

7. Unité porte-broche/broche d'une machine-outil, comprenant :
- un porte-broche (6) pouvant se déplacer le long d'une direction axiale, ayant un espace de porte-broche interne ouvert à l'avant à travers une ouverture du porte-broche,
- une broche (8), au moins en partie emboîtée dans ledit espace de porte-broche et supportée pour tourner autour d'un axe de rotation, ladite broche étant raccordée en service au porte-broche afin de se déplacer le long de ladite direction axiale entre une position rétractée et une position déployée, appropriée pour effectuer un processus, dans laquelle elle fait saillie à l'avant du porte-broche à travers ladite ouverture du porte-broche davantage que dans ladite position rétractée, ladite broche comprenant un élément de signalisation (10), et
- un dispositif de détection fabriqué selon l'une quelconque des revendications précédentes.

8. Unité porte-broche/broche selon la revendication 7, comprenant des premiers moyens de mesure appropriés pour mesurer l'avancement axial de la broche entre une position de référence fixe sur le porte-broche et une position de référence mobile par rapport au porte-broche et d'un seul tenant avec la broche.

9. Unité porte-broche/broche selon la revendication 8, dans laquelle lesdits moyens de mesure comprennent :
- une première règle optique (18) d'un seul tenant avec le porte-broche en déplacement et fixée sur ledit porte-broche dans une position de règle pour la broche (14), qui assure ladite position de référence fixe sur le porte-broche, et
- un premier capteur de règle (20) d'un seul tenant avec la broche en rotation et convenant pour coopérer avec ladite première règle optique pour détecter l'avancement axial de la broche.

10. Groupe mobile d'une machine-outil comprenant :
- un support de déplacement (4) pouvant être associé à un guide fixe (2) et mobile le long d'une direction longitudinale dudit guide fixe ;
- une unité porte-broche/broche selon l'une quelconque des revendications 7 à 9, associée de manière mobile audit support de déplacement.

11. Groupe mobile selon la revendication 10, comprenant des seconds moyens de mesure appropriés pour mesurer l'avancement axial du porte-broche.

12. Groupe mobile selon la revendication 11, dans lequel lesdits seconds moyens de mesure comprennent :
- une seconde règle optique (22) d'un seul tenant avec le support de déplacement en déplacement et fixée sur ledit support de déplacement dans une position de règle pour le porte-broche (24) et
- un second capteur de règle (26) d'un seul tenant avec le porte-broche en rotation, convenant pour coopérer avec ladite seconde règle optique pour détecter l'avancement axial du porte-broche.

13. Groupe mobile selon l'une quelconque des revendications 10 à 12, comprenant des seconds moyens de détection appropriés pour détecter la déformation du porte-broche.

14. Groupe mobile selon la revendication 13, dans lequel lesdits seconds moyens de détection comprennent :
- une barre (28) de matériau sensiblement non déformable thermiquement qui s'étend principalement dans la direction axiale, entre une extrémité avant, fixée sur le porte-broche à proximité de son extrémité avant, et une extrémité arrière, et
- un capteur de barre (30) d'un seul tenant avec le porte-broche et convenant pour détecter la distance axiale de ladite extrémité arrière de la barre.

15. Machine-outil (1) comprenant un groupe mobile selon l'une quelconque des revendications 10 à 14.
